# EUROPÄISCHE PATENTSCHRIFT

(11) **EP 3 611 309 B1**
(45) Veröffentlichungstag und Bekanntmachung des Hinweises auf die Patenterteilung: **14.09.2022**
(21) Anmeldenummer: 19185520.4
(22) Anmeldetag: 10.07.2019
(51) Int. Cl.: E04D 12/00, B32B 27/12, E04D 5/14

(54) **VERFAHREN ZUR VERLEGUNG EINER UNTERDACHBAHN**
METHOD FOR THE INSTALLATION OF A ROOF UNDERLAY
METHODE DE POSE D'UNE MEMBRANE DE SOUS-TOITURE

(30) Priorität: 15.08.2018 DE 102018006401
(43) Veröffentlichungstag der Anmeldung: 19.02.2020
(73) Patentinhaber: EWALD DÖRKEN AG, 58313 Herdecke (DE)
(72) Erfinder: BACHON, Thomas, 40597 Düsseldorf (DE); FLAIG, Ronald, 51373 Leverkusen (DE); Klingelhage, Norbert, 58300 Wetter (DE); Wolf, Michael, 42105 Wuppertal (DE)
(74) Vertreter: Von Rohr Patentanwälte Partnerschaft mbB

(56) Entgegenhaltungen:
- EP-A1- 1 022 125
- EP-A1- 1 489 246
- EP-A1- 3 345 757
- EP-A2- 0 716 176
- EP-B1- 1 022 125
- EP-B1- 1 489 246
- DE-A1- 19 904 423
- DE-U1- 29 700 987
- DE-U1-202006 017 586
- DE-U1-202010 000 934
- DE-U1-202015 000 535
- US-B1- 9 212 488

## Beschreibung

Es wird eine Unterdachbahn beschrieben, insbesondere Unterspann- und/oder Unterdeckbahn, vorzugsweise vorgesehen zur Verwendung für Steildächer mit angrenzenden Dachflächen, mit längsrandseitigen Klebezonen, wobei auf der Unterseite und auf der Oberseite wenigstens eine längsrandseitige Klebezone vorgesehen ist.

Die vorliegende Erfindung betrifft ein Verfahren zur Verlegung einer Unterdachbahn gemäß Anspruch 1.

Die Oberseite der Unterdachbahn ist der Witterungsseite und/oder der Hartbedachung zugewandt, während die Unterseite der Witterungsseite und/oder der der Hartbedachung abgewandt ist. Die Unterseite ist damit nach innen gerichtet - das heißt dem Inneren des Gebäudes zugewandt.

Unterdachbahnen der vorgenannten Art sind seit Jahren in der Praxis bekannt. Hauptaufgabe ist es zumeist, die Regensicherheit und/oder Wasserdichtheit unter einer Hartbedachung sicherzustellen.

Die Unterdachbahn wird als Bahnenware in Streifen auf dem Dach befestigt. Allerdings kann zwischen unverbundenen Bahnen Wind eindringen und die Wirkung der Dämmung durch konvektive Strömung mindern. Abhilfe wird hierbei durch das Verbinden der Bahnen untereinander geschaffen. Dies kann durch die Verbindung eines Klebebandes oder - besonders verlegefreundlich - durch Nahtselbstverklebung erreicht werden.

In einer im Hinblick auf die Verklebesicherheit weiter verbesserten Variante ist die Verwendung zweier gegenüberliegender Klebeflächen bekannt, so dass letztlich Kleber-in-Kleber verklebt wird. Diese Klebezonen müssen dazu auf verschiedenen Seiten der Unterdachbahn vorgesehen sein und zur Verklebung benachbarter Bahnen aufeinander aufliegen.

Als Klebezone wird eine einen Kleber bzw. ein Klebemittel aufweisende Zone bzw. ein diesbezüglicher Bereich verstanden, der derart ausgebildet ist, dass eine Verklebung benachbarter Unterdachbahnen untereinander gewährleistet werden kann.

Für einfache Geometrien eines Steildachs, wie Pultdächer und Satteldächer, ist die oben beschriebene Vorausrüstung der Unterdachbahn ausreichend, um eine effiziente Materialausnutzung zu ermöglichen.

Für schwierige Geometrien, insbesondere solche, bei denen Dachflächen aneinander grenzen, wie beispielsweise bei Walmdächern, Krüppelwalmdächern oder Dächern mit Kehlen, ergibt sich hingegen die Problematik, dass große Verschnittmengen auftreten, die leicht mehr als 20 % des eingesetzten Materials ausmachen. Je mehr sich dabei die Form vom Trapez zum Dreieck annähert, desto umfangreicher fällt der Verschnitt aus. Dies hängt damit zusammen, dass die Bahnen dergestalt überlappend verlegt werden, dass sich keine Hinterläufigkeit für Wasser ergibt.

Darüber hinaus tritt das gleiche Problem auch dann auf, wenn nur eine Klebezone vorhanden ist und die Gegenfläche für die Klebezone kleberfrei ist. Auch in diesem Fall führt die überlappende Verlegung dazu, dass ein entsprechender Verschnitt anfällt.

DE 20 2015 000535 U offenbart eine Unterdachbahn, die sich 180° drehen lässt, um den Verschnitt zu reduzieren. EP 3 345 757 offenbart eine andere Unterdachbahn mit identisch ausgebildeten Unter- und Oberschichten.

Aufgabe der Erfindung ist es nun, ein Verfahren zur Verlegung einer Unterdachbahn bereitzustellen, die ohne nennenswerten Verschnitt, insbesondere auch an Steildächern mit angrenzenden Dachflächen, eingesetzt werden kann.

Die vorgenannte Aufgabe wird durch die Merkmale des Anspruchs gelöst.

Unter einer identischen Ausbildung ist insbesondere zu verstehen, dass die Oberseite und die Unterseite die gleiche Oberfläche, gleiche Oberflächeneigenschaften und/oder das gleiche Material bzw. die gleiche Materialzusammensetzung aufweisen. Letztlich kann eine Unterseite der Unterdachbahn als Oberseite eingesetzt werden, wobei sich insbesondere die Oberseite nicht von der Unterseite hinsichtlich ihrer Materialeigenschaften und/oder ihrer Funktion(en) unterscheidet. Letztlich ist insbesondere die erfindungsgemäße Bahn, unabhängig davon, welche Seite die Oberseite bildet, immer funktionsgleich.

Bevorzugt wird unter einer identischen Ausbildung verstanden, dass die Oberseite und die Unterseite aus dem gleichen Material hergestellt sind, insbesondere nach dem gleichen Herstellungsverfahren.

Es ist gemäß der identischen Ausbildung der Oberseite und der Unterseite vorgesehen, dass die Unterseite zumindest im Wesentlichen das gleiche Flächengewicht wie die Oberseite aufweist, insbesondere wobei sich die Flächengewichte, insbesondere die Vliesgewichte und/oder Materialgewichte, um kleiner als 20 g/m², bevorzugt zwischen 0,0001 bis 20 g/m², weiter bevorzugt kleiner als 10 g/m², weiter bevorzugt weiter kleiner als 5 g/m², voneinander unterscheiden, insbesondere voneinander abweichen.

Bei einer identischen Ausbildung der Oberseite und der Unterseite kann vorgesehen sein, dass die Oberseite und die Unterseite eine unterschiedliche Farbgebung, insbesondere verschiedene Farben, aufweisen. Grundsätzlich können die Oberseite und die Unterseite natürlich auch die gleiche Farbe aufweisen. Zudem können verschiedene Bedruckungen auf der Unterseite und der Oberseite vorgesehen sein. Bevorzugt sind die Oberseite und die Unterseite gleich bedruckt. Letztlich beeinflussen insbesondere weder die Bedruckung noch die Farbgebung die funktionellen Eigenschaften der Oberseite und der Unterseite.

Während die vorgenannten Seiten - die Oberseite und die Unterseite der Unterdachbahn - als solche identisch ausgebildet sind, können die Klebezonen an den Längsrändern verschieden ausgebildet sein. Bevorzugt ist vorgesehen, dass die Klebezone auf der Oberseite identisch zu der Klebezone auf der Unterseite der Unterdachbahn ausgebildet ist. Dies kann sowohl die Kleberauswahl, die Breite des Kleberauftrags und/oder die Grammatur des Kleberauftrags betreffen.

Durch die identische Ausbildung der Ober- und Unterseite kann ein um bis zu 80 % verringerter Verschnitt erreicht werden. Bei der Bahnverlegung ist es so, dass die erste Bahnreihe an der angrenzenden Dachfläche schräg, abgeschnitten wird. Der abgeschnittene Teil der Dachbahn kann dann umgedreht werden, so dass die vorherige Unterseite (der ersten Bahnreihe) nun die Oberseite für die zweite Bahnreihe bildet. Somit kann der abgeschnittene Teil der Unterdachbahn (zweite Bahnreihe) oberseitig auf die erste Bahnreihe verlegt werden, wobei eine Kleber-in-Kleber-Verbindung weiterhin gewährleistet ist. Die Kleber-in-Kleber-Verbindung stellt sicher, dass eine winddichte Verklebung der Bahnreihen erfolgen kann. Möglich ist dies letztlich durch das erfindungsgemäße Verfahren.

Letztlich versteht es sich, dass erfindungsgemäß bei der Verlegung der Unterdachbahn grundsätzlich die Oberseite als Unterseite und die Unterseite als Oberseite eingesetzt werden kann. Somit kann beim Zuschneiden der Unterdachbahn beispielsweise in der ersten Reihe die Oberseite der Unterdachbahn der Witterungsseite zugewandt sein, während in der über der ersten Reihe angeordneten zweiten Reihe bildet - wie zuvor erwähnt - die Oberseite der ersten Bahn die Unterseite der zweiten Bahn bilden kann.

Vorteilhafterweise muss bei der Verlegung nicht darauf geachtet werden, welche Seite der Unterdachbahn als Oberseite oder Unterseite vorgesehen ist. Dies reduziert Fehler bei der Verlegung der Unterdachbahn, da die Unterdachbahn nicht mehr auf der "falschen Seite" auf die Bedachung angeordnet werden kann.

Durch den um bis zu 80 % reduzierbaren Verschnitt kann die Verlegung einer Unterdachbahn auf Steildächern mit angrenzenden Dachbahnen sehr ressourcenschonend und gleichzeitig wirtschaftlich sein.

Des Weiteren kann der beschriebene Aufbau auch für weitere Dachformen, beispielsweise ein Flachdach, eingesetzt werden. In diesem Zusammenhang zeigt sich der Vorteil, dass der Verleger der Unterdachbahn nicht mehr zwischen einer Oberseite und einer Unterseite entscheiden muss.

Bei einer besonders bevorzugten Ausführungsform ist vorgesehen, dass die Unterdachbahn eine die Unterseite aufweisende Unterschicht und eine die Oberseite aufweisende Oberschicht aufweist, wobei die Unterschicht bezogen auf die Mittenebene der Unterdachbahn symmetrisch, vorzugsweise identisch, zu der Oberschicht ausgebildet ist. Symmetrisch bedeutet in diesem Zusammenhang, dass eine Rotationssymmetrie und/oder Spiegelsymmetrie zur Mittenebene der Unterdachbahn vorgesehen ist. Die Mittenebene der Unterdachbahn verläuft mittig durch den Querschnitt der Unterdachbahn und teilt letztlich die Unterdachbahn in zwei symmetrische Hälften auf. Insbesondere verläuft die Mittenebene horizontal entlang des Querschnitts der Unterdachbahn.

Die Unterschicht und/oder die Oberschicht kann ein- oder mehrlagig ausgebildet sein. Bei einer symmetrischen Ausbildung der Unterschicht zu der Oberschicht ist vorgesehen, dass ein symmetrischer Aufbau der Lagen der vorgenannten Schichten vorhanden ist. Durch den symmetrischen Aufbau kann insbesondere gewährleistet werden, dass bei einer identischen Oberseite und Unterseite auch identische Eigenschaften der Oberschicht und der Unterschicht im jeweiligen Benutzungszustand gewährleistet werden können.

Vorzugsweise weist die gesamte Unterdachbahn einen symmetrischen Schichtaufbau auf. Letztlich kann also bei einem symmetrischen Schichtaufbau durch die Mitte des Querschnitts der Unterdachbahn eine Spiegelachse für die Schichten verlaufen, so dass insbesondere ein spiegelsymmetrischer Aufbau des Schichtaufbaus vorgesehen ist. Durch den symmetrischen, vorzugsweise spiegelsymmetrischen, Aufbau können gleiche technische Eigenschaften auf der Ober- und Unterseite hinreichend sichergestellt werden.

Die Unterdachbahn weist eine wasserdampfdurchlässige und diffusionsoffene Funktionsschicht auf. Insbesondere ist die Funktionsschicht derart ausgebildet, dass die Unterdachbahn im Gesamten diffusionsoffen und wasserdampfdurchlässig und/oder wasserdicht, insbesondere wasserdampfdurchlässig und wasserdicht, ausgebildet ist. Die Funktionsschicht ist insbesondere zwischen der Oberschicht und der Unterschicht angeordnet sein.

Es ist vorgesehen, dass die Funktionsschicht als mikroporöser Film und/oder als monolithische Membranschicht ausgebildet ist.

Die mikroporöse Funktionsschicht ist insbesondere aus polyolefinischer Kunststoffbasis ausgeführt. Polyolefine sind Polymere, die aus Alkenen, wie Ethylen, Polypropylen, 1-Buten oder Isobuten, durch Kettenpolymerisation hergestellt werden. Polyolefine sind gesättigte Kohlenwasserstoffe, die mengenmäßig die größte Gruppe der Kunststoffe ergeben. Darüber hinaus sind sie den teilkristallinen Thermoplasten zuzuordnen, wobei sich Thermoplaste insbesondere leicht aufgrund einer möglichen reversiblen Verformung verarbeiten lassen. Zusätzlich zeichnen sich Polyolefine durch eine gute chemische Beständigkeit und besonders gute elektrische Isoliereigenschaften aus.

Im Übrigen bedeutet "mikroporös" im Zusammenhang mit der Funktionsschicht, die insbesondere als Membranschicht ausgebildet sein kann, dass die Membranschicht mikroskopisch kleine Löcher bzw. Durchbrechungen aufweist, die groß genug ausgebildet sind, dass Wasserdampfmoleküle durch sie hindurch diffundieren können. Gleichzeitig sind diese Löcher bzw. Durchbrechungen jedoch so klein ausgestaltet, dass größere Wassermoleküle, insbesondere Wassermoleküle von Regentropfen, nicht durch die Membranschicht hindurch gelangen können. In diesem Fall gibt die Mikroporösität an, dass die Unterdachbahn gleichzeitig sowohl wasserdicht als auch wasserdampfdurchlässig ausgeführt ist. Die mikroporöse Struktur der Membranschicht wird durch eine spezielle Vorbehandlung erzeugt. So werden dem zu verarbeitenden Kunststoffmaterial Füllstoffe, vorzugsweise Calciumcarbonate und insbesondere Kreidepartikel, zugegeben. Dieses Material wird anschließend zur Herstellung der Membranschicht extrudiert und in einem weiteren Schritt bei hohen Temperaturen mono- oder biaxial gereckt und dann unter Spannung abgekühlt. Durch das Recken reißt die extrudierte Membranschicht insbesondere im Bereich der Füllstoffe auf, wodurch sich die Mikroporösität ergibt.

Bei einer besonders bevorzugten Ausgestaltung der Unterdachbahn ist die Verwendung von Polypropylen (PP) und/oder Polyethylen (PE) als Basis für das Material der als Membranschicht ausgebildeten Funktionsschicht vorgesehen. Dabei sind Polypropylene (PP) und Polyethylene (PE) den Polyolefinen zuzuordnen.

Bei einer besonders bevorzugten Ausführungsform ist vorgesehen, dass die Funktionsschicht als monolithische Membranschicht ausgebildet ist. Unter einer monolithischen Membranschicht wird insbesondere eine geschlossenzellige und/oder porenfreie Schicht einer Membran verstanden. Monolithische Membranschichten können insbesondere einen besonders guten Schutz gegen Schlagregen bei gleichzeitiger Diffusionsoffenheit gewährleisten. Anders als bei der herkömmlichen mikroporösen Membranschicht kann der Feuchtetransport aktiv entlang der Molekülketten durch Diffusion stattfinden.

Des Weiteren wird unter einer Membranschicht eine derartige Schicht verstanden, die eine selektive Durchlässigkeit aufweist. Membranen können grundsätzlich unterschiedlich beschaffen und insbesondere als Folien oder Textilien ausgebildet sein. Membranschichten stellen beispielsweise beim Einsatz als bzw. in einer Unterdachbahn sicher, dass die äußeren Einflüsse der Witterung keinen schädlichen Einfluss für das Gebäudeinnere bewirken.

Vorzugsweise weist die Funktionsschicht als Material Kunststoff und/oder Kunstharz auf und/oder besteht daraus. Des Weiteren ist insbesondere ein elastomeres und/oder ein thermoplastisches Material als Material für die Funktionsschicht vorgesehen, vorzugsweise Polyurethankunststoff, insbesondere thermoplastisches Polyurethan (TPU). Bevorzugt besteht die Funktionsschicht aus thermoplastischem Polyurethan. Eine TPU-Folie weist eine hohe mechanische Stabilität auf und ist insbesondere zumindest im Wesentlichen beständig gegen Witterungs- und/oder Umwelteinflüsse.

Bei einer weiteren bevorzugten Ausführungsform ist vorgesehen, dass das Material der Funktionsschicht, insbesondere das thermoplastische Polyurethan, einen Anteil von wenigstens 10 %, bevorzugt von 15% bis 100 %, weiter bevorzugt von 20 % bis 70 %, an aus nachwachsenden Rohstoffen stammenden Material aufweist. Als nachwachsende Rohstoffe (NawaRo bzw. NR) sind insbesondere organische Rohstoffe zu verstehen, die aus land- und forstwirtschaftlicher Produktion stammen und vom Menschen zielgerichtet für weiterführende Anwendungszwecke außerhalb des Nahrungs- und Futterbereiches verwendet werden.

Darüber hinaus kann die Funktionsschicht eine Grammatur bzw. ein Flächengewicht von kleiner als 100 g/m² aufweisen. Insbesondere liegt das Flächengewicht zwischen 1 g/m² bis 70 g/m², weiter bevorzugt zwischen 3 g/m² bis 40 g/m². Besonders bevorzugt liegt das Flächengewicht der Funktionsschicht zwischen 4 g/m² bis 30 g/m² und insbesondere zwischen 5 g/m² bis 25 g/m².

Bei einer ganz besonders bevorzugten Ausführungsform ist vorgesehen, dass die als monolithische Membranschicht ausgebildete Funktionsschicht als Material thermoplastisches Copolyester (TPEE) und/oder thermoplastisches Polyurethan (TPU) aufweist und/oder daraus besteht.

Weiterhin weisen die Unterschicht und die Oberschicht wenigstens eine Trägerschicht, nämlich eine identisch ausgebildete Vliesschicht, auf.

Insbesondere kann die Trägerschicht als eine thermostrahlverfestigte oder nadel- oder nassstrahlverfestigte, Vliesschicht ausgebildet sein.

Das Flächengewicht der als Vliesschicht ausgebildeten Oberschicht und der als identisch zur Oberschicht ausgebildeten Unterschicht liegt zwischen 40 bis 100 g/m².

Ein Aufbau der Form: Oberschicht (Vliesschicht) - Funktionsschicht - Unterschicht (Vliesschicht) ist vorgesehen, wobei die oberseitige Vliesschicht zumindest im Wesentlichen identisch zur unterseitigen Vliesschicht ausgebildet ist (identische Ausbildung der Oberschicht und der Unterschicht).

Des Weiteren ist ganz besonders bevorzugt, wenn die als Vliesschicht ausgebildete Oberschicht und/oder Unterschicht als Material einen Kunststoff aufweist. Vorzugsweise kann als Kunststoff Polypropylen (PP) und/oder Polyethylen (PE) und/oder Polyethylentherephthalat (PET) vorgesehen. Des Weiteren ist insbesondere die Vliesschicht als Spinnvlies ausgebildet.

In weiteren Ausführungsformen kann auch ein wenigstens eine die Komponenten-Faser aufweisende Vliesschicht vorgesehen sein.

Als Vliesschicht kann ein polyolefinisches Vlies, ein Polyestervlies, ein Naturfaservlies, ein Polypropylen-Spinnvlies, ein Polyamid-Vlies, ein Polylactide-Vlies (PLA-Vlies) vorgesehen sein und/oder die Vliesschicht ist als engmaschiges Gewirke ausgebildet. Folglich sind insbesondere auch die Oberseite und die Unterseite und/oder Oberschicht und Unterschicht als identisch ausgebildete Vlies-Trägerschichten vorgesehen.

Zudem kann die Unterdachbahn winddicht und/oder regensicher, insbesondere wasserdicht, ausgebildet sein. Bei einer regensicheren und/oder wasserdichten Ausbildung der Unterdachbahn ist vorgesehen, dass diese eine Wassersäule von größer als 800 mm, bevorzugt zwischen 1000 mm bis 10000 mm, weiter bevorzugt zwischen 1500 mm und 9000 mm, aufweist. Die Wassersäule ist eine Maßeinheit, die die Wasserdichtigkeit von technischen Geweben angibt. Sie kann nach DIN EN 20811:1992, auch ISO 811 genannt, bestimmt werden (Stand Juli 2018).

Die Unterdachbahn weist einen S_{d}-Wert von kleiner oder gleich 0,5 m auf, bevorzugt von 0,01 bis 0,5 m, weiter bevorzugt von 0,2 m, besonders bevorzugt von 0,01 bis 0,1 m, auf. Der S_{d}-Wert gibt die wasserdampfdiffusionsäquivalente Luftschichtdicke an und ist ein bauphysikalisches Maß für den Wasserdampfdiffusionswiderstand eines Bauteils oder einer Bauteilschicht. Über den S_{d}-Wert kann die Dampfdurchlässigkeit eines Baustoffs beurteilt werden. Der Wasserdampfdiffusionswiderstand wird anschaulich durch die Dicke einer ruhenden Luftschicht beschrieben, die notwendig ist, so dass die Luftschicht im stationären Zustand unter denselben Bedingungen von demselben Diffusionsstrom - wie das betrachtete Bauteil - durchflossen wird.

Die Unterdachbahn ist diffusionsoffen ausgebildet, wobei die Unterdachbahn bei einem S_{d}-Wert von kleiner oder gleich 0,5 m diffusionsoffen ausgebildet ist.

Bei einer weiteren ganz besonders bevorzugten Ausführungsform ist vorgesehen, dass die Funktionsschicht einen S_{d}-Wert von kleiner oder gleich 0,5 m, bevorzugt von 0,01 bis 0,5 m, weiter bevorzugt von kleiner als 0,1 m, aufweist.

Besonders bevorzugt ist die längsrandseitige Klebezone vom äußeren Längsrand der Unterdachbahn beabstandet. Weiter bevorzugt ist ein kleberfreier Bereich auf der Oberfläche der Oberseite und/oder der Unterseite von größer als 50 %, vorzugsweise zwischen 50 % bis 95 %, weiter bevorzugt zwischen 80 % bis 90 %, vorgesehen. Ein klebstofffreier bzw. kleberfreier Bereich gibt denjenigen Anteil der Oberfläche der Unterdachbahn an, die nicht durch eine Klebezone verdeckt ist. Letztlich ist also die Klebezone nur längsrandseitig jeweils auf der Oberseite und der Unterseite vorgesehen. Hierbei versteht es sich, dass bevorzugt genau zwei Klebezonen auf der Unterdachbahn vorhanden sind. Dabei sind die Klebezonen auf gegenüberliegenden Seiten vorzugsweise rotationssymmetrisch und/oder spiegelsymmetrisch zur Mittenebene der Unterdachbahn ausgebildet.

Insbesondere wird die Klebezone zwischen 1 bis 90 mm vom Längsrand entfernt, bevorzugt zwischen 3 bis 70 mm, weiter bevorzugt zwischen 5 bis 50 mm.

Bei einer weiteren Ausführungsform können auch genau vier Klebezonen vorhanden sein, wobei jeweils zwei längsrandseitige Klebezonen auf der Ober- und der Unterseite vorgesehen ist, wobei demzufolge an jedem Längsrand der Oberseite und der Unterseite eine Klebezone vorhanden ist.

Außerdem kann die Klebezone streifenförmig, gegebenenfalls als unterbrochene Streifen, ausgebildet sein. Eine streifenförmige Ausbildung ermöglicht eine saubere und einfache Anordnung der Bahnen übereinander, insbesondere bei einer Kleber-in-Kleber-Verbindung.

Bei einer streifenförmigen Ausbildung der Klebezone ist vorgesehen, dass insbesondere die Anzahl der Streifen zwischen 1 bis 15, bevorzugt zwischen 3 bis 12, weiter bevorzugt zwischen 5 bis 9, beträgt.

Die Streifenbreite eines Streifens kann insbesondere zwischen 1 bis 30 mm, bevorzugt zwischen 1,5 bis 10 mm, weiter bevorzugt zwischen 2 bis 5 mm, liegen.

Insbesondere kann die Klebezone auf der Oberseite und/oder auf der Unterseite eine Breite zwischen 0,1 bis 25 cm, bevorzugt zwischen 2 bis 10 cm, aufweisen. Letztlich versteht es sich, dass die wenigstens zwei Klebezonen der Unterdachbahn eine voneinander unterschiedliche Breite aufweisen können. Besonders bevorzugt ist jedoch, dass die Klebezonen eine identische Breite und/oder eine voneinander um maximal 10 %, bevorzugt 5 %, abweichende Breite der Klebezone aufweisen.

Vorzugsweise erfolgt die Verklebung der Klebezonen derart, dass bei Verklebung benachbarter Unterdachbahnen eine winddichte und/oder luftdichte Verklebung erfolgt. Insbesondere kann demzufolge kein Wind zwischen die verklebten Bereiche eindringen. Insbesondere erfolgt eine Kleber-in-Kleber-Verbindung, das heißt die Klebezonen werden zumindest bereichsweise übereinander angeordnet, und zwar derart, dass eine feste und dauerhafte Verklebung der Unterdachbahnen erfolgt. In diesem Zusammenhang versteht es sich, dass die Klebezonen gleich ausgebildet sein können und/oder voneinander sich unterscheidende Eigenschaften aufweisen können.

Darüber hinaus kann die Versetzung der ober- und unterseitigen Klebezonen von einem Längsrand der Unterdachbahn derart vorgesehen sein, dass bei Verklebung benachbarter Bahnen eine nur teilweise Kleber-in-Kleber-Verbindung zwischen den Klebezonen benachbarter Unterdachbahnen oder sogar keine solche Verbindung entsteht. Wie zuvor dargelegt, ermöglicht die Kleber-in-Kleber-Verbindung eine winddichte, luftdichte, diffusionsoffene und/oder wasserdichte Verklebung der Unterdachbahnen. Somit können auch an den Übergangsbereichen der Unterdachbahnen, insbesondere dem Längsrandbereich, die benötigten Eigenschaften der Unterdachbahn, vorzugsweise bei Verlegung auf einem Steildach, hinreichend gewährleistet werden.

Bei einer weiteren bevorzugten Ausführungsform ist vorgesehen, dass die Gegenfläche für die den Kleber aufweisende Klebezone mit einem Liner, insbesondere durch einen Lack, abgedeckt und/oder oberflächenbehandelt ist. Durch die Abdeckung des Klebers bzw. der Klebezonen kann gewährleistet werden, dass bei Verlegung der Unterdachbahn keine Verschmutzung der Klebezone vorhanden ist bzw. der Grad der Verschmutzung möglichst gering gehalten wird. Folglich kann eine winddichte und/oder wasserdichte Verklebung, vorzugsweise über eine Kleber-in-Kleber-Verbindung, hergestellt werden.

Bei der Unterdachbahn handelt es sich um einen mehrlagigen Schichtaufbau, der zwei Vliesebenen aufweist - und zwar auf der Oberseite und der Unterseite, insbesondere in der Oberschicht und in der Unterschicht.

Die Vliesschicht kann insbesondere als Träger für die Funktionsschicht, insbesondere die diffusionsoffene Funktionsschicht, eines, vorzugsweise diffusionsoffen, Films ausgebildet sein.

Vorzugsweise weist die in der Oberschicht und/oder Unterschicht vorgesehene Vliesschicht eine Grammatur zwischen 15 bis 500 g/m², bevorzugt zwischen 40 und 250 g/m², weiter bevorzugt zwischen 60 und 150 g/m², auf.

Um eine leichtere Verlegung, insbesondere bei regelmäßigen Walmdächern, zu ermöglichen, können die einzelnen Unterdachbahnen oberseitig und unterseitig zudem mit wenigstens einer Schnittmarkierung versehen sein. Die Schnittmarkierung weist dabei bevorzugt Hilfslinien für die möglichen Schnitte auf. Insbesondere können die Hilfslinien der Schnittmarkierung in einem Winkel von 30°, 45° und 60° verlaufen. Auf der Unterdachbahn sind bevorzugt eine Vielzahl von Schnittmarkierungen auf der Oberseite und/oder der Unterseite vorgesehen, die sich periodisch wiederholen. Die Schnittmarkierung bzw. die einzelnen Hilfslinien der Schnittmarkierung können durch eine Bedruckung und/oder eine Prägung in der Oberfläche realisiert sein.

Bei der verwendeten Unterdachbahn als solche handelt es sich bevorzugt um Rollenware mit einer Bahnlänge zwischen 30 m und 100 m, insbesondere von etwa 50 m. Die Breite der Bahnen liegt bevorzugt zwischen 1 m und 3 m und insbesondere bei 1,5 m +/- 0,2 m.

Das Flächengewicht des Klebers der Klebezone kann insbesondere 50 bis 500 g/m², bevorzugt zwischen 75 bis 300 g/m², weiter bevorzugt zwischen 100 bis 150 g/m², betragen.

Als verwendeter Kleber der Klebezone kann insbesondere ein Hotmelt auf Basis von Polyolefin, Polyamid, Polyurethan und/oder Acrylat vorgesehen sein. Alternativ oder zusätzlich kann eine getrocknete Dispersion oder Lösung von Acrylaten und/oder Polyurethan für den verwendeten Kleber der Klebezone vorgesehen sein.

Als Auftragstechnik kann insbesondere ein Zulauf vorgefertigter Kleberbänder oder ein Inline-Auftrag aus einer Düse - mit Erkalten und Trocknenlassen des Klebers in der Klebezone - vorgesehen sein.

Verfahrensgemäß ist vorgesehen, dass eine Unterdachbahn der vorgenannten Art auf Steildächern mit angrenzenden Dachflächen derart verlegt wird, dass eine erste Bahnreihe schräg an einer angrenzenden Dachfläche abgeschnitten wird, wobei der abgeschnittene Teil der ersten Bahnreihe eine benachbarte Bahnreihe bildet, wobei die benachbarte Bahnreihe umgedreht wird, so dass die Oberseite der ersten Bahnreihe die Unterseite der benachbarten Bahnreihe bildet, insbesondere wobei die benachbarte Bahnreihe unmittelbar und/oder mittelbar mit der ersten Bahnreihe verbunden wird.

Vorzugsweise wird die Unterseite der benachbarten Bahnreihe zumindestens bereichsweise überlappend auf der Oberseite der ersten Bahnreihe angeordnet. Es versteht sich dabei, dass die erste Bahnreihe an ihrer kurzen Stirnseite schräg abgeschnitten wird.

Der abgeschnittene Teil der ersten Bahnreihe kann alternativ oder zusätzlich die benachbarte Bahnreihe auf der angrenzenden Dachfläche bilden, wobei die Oberseite der ersten Bahnreihe die Unterseite der benachbarten Bahnreihe auf der angrenzenden Dachfläche bildet. Anschließend wird die benachbarte Bahnreihe neben der ersten Bahnreihe auf der angrenzenden Dachfläche angeordnet.

In diesem Zusammenhang versteht es sich, dass sich bevorzugte Ausführungsformen der Unterdachbahn auch auf das erfindungsgemäße Verfahren anwenden lassen. Zuvor genannte Vorteile und besondere Merkmale lassen sich auch auf das erfindungsgemäße Verfahren zur Verlegung der Unterdachbahn anwenden, so dass zur Vermeidung von unnötigen Wiederholungen für diesbezügliche Ausführungen auf die vorherige Beschreibung verwiesen werden darf.

Die benachbarte Bahnreihe kann mittelbar und/oder unmittelbar mit der ersten Bahnreihe verbunden werden. Bei einem mittelbaren Verbund ist vorgesehen, dass noch weitere Bahnreihen zwischen der ersten Bahnreihe und der benachbarten Bahnreihe verlegt werden.

Verfahrensgemäß kann bei der unmittelbaren Überlappung der ersten Bahnreihe und der benachbarten Bahnreihe vorgesehen sind, dass eine Kleber-in-Kleber-Verbindung erfolgt. Alternativ kann auch vorgesehen sein, dass die Klebezonen der Bahnreihen nebeneinander angeordnet werden.

Die verlegten Reihen der Unterdachbahn können eine Unterdachbedachung bilden und/oder als Bestandteil einer Unterdachbedachung ausgebildet sein.

Das erfindungsgemäße Verlegeverfahren kann letztlich dadurch umgesetzt werden, dass die Oberseite und die Unterseite der Unterdachbahn identisch, insbesondere funktionsgleich, ausgebildet sind. Im Zusammenhang mit der identischen Ausbildung der Oberseite und der Unterseite sei auf die vorherigen Ausführungen verwiesen.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, selbst wenn diese Zwischenintervalle und Einzelwerte nicht konkret angegeben sind.

Es zeigt
- Fig. 1: eine schematische Querschnittsansicht der Unterdachbahn,
- Fig. 2: eine schematische Querschnittsansicht einer weiteren Ausführungsform der Unterdachbahn,
- Fig. 3: eine schematische Querschnittsansicht einer weiteren Ausführungsform der Unterdachbahn,
- Fig. 4: eine schematische Querschnittsansicht einer weiteren Ausführungsform der Unterdachbahn,
- Fig. 5: eine schematische Querschnittsansicht einer weiteren Ausführungsform der Unterdachbahn,
- Fig. 6: eine schematische Querschnittsansicht einer weiteren Ausführungsform der Unterdachbahn,
- Fig. 7: eine schematische perspektivische Ansicht einer weiteren Ausführungsform der Unterdachbahn,
- Fig. 8: eine schematische Darstellung der Zuschneidung der Unterdachbahn,
- Fig. 9: eine schematische Darstellung der verlegten Unterdachbahn aus Fig. 8,
- Fig. 10: eine schematische Darstellung der Verlegung der Unterdachbahn und
- Fig. 11: eine schematische Darstellung einer weiteren Möglichkeit der Verlegung der Unterdachbahn.

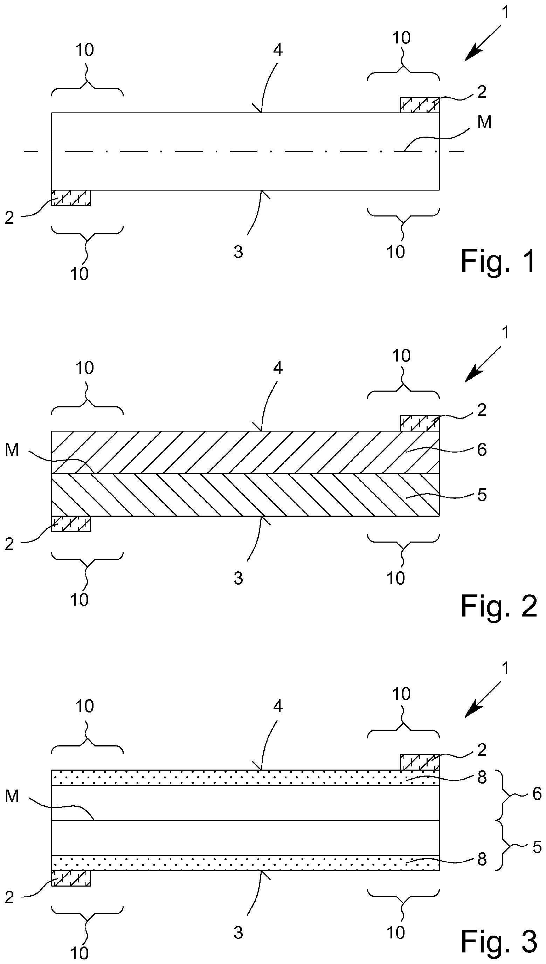

Fig. 1 zeigt eine Unterdachbahn 1 mit längsrandseitigen Klebezonen 2. Die längsrandseitigen Klebezonen 2 sind auf der Unterseite 3 und der Oberseite 4 vorgesehen. Die in Fig. 1 dargestellte Unterdachbahn 1 kann als Unterspann- und/oder Unterdeckbahn für Steildächer mit angrenzenden Dachflächen verwendet werden. Die Oberseite 4 ist der Witterungsseite bzw. einer Hartbedachung zugewandt, wobei die Unterseite 3 dem Inneren eines Gebäudes bzw. dem Inneren zugewandt ist. Bei der in Fig. 1 dargestellten Ausführungsform ist vorgesehen, dass die im verlegten Zustand nach innen zeigende Unterseite 3 und die der Witterungsseite zugewandte Oberseite 4 identisch ausgebildet sind.

Identisch bedeutet in diesem Zusammenhang, dass die Unterseite 3 die gleiche Oberfläche, die gleichen Oberflächeneigenschaften und/oder die gleichen Materialeigenschaften bzw. das gleiche Material wie die Oberseite 4 der Unterdachbahn 1 aufweist und insbesondere funktionsgleich ist. Bevorzugt können die Oberseite 4 und die Unterseite 3 auch identische Klebezonen 2 aufweisen. Letztlich ist die Unterseite 3 gleich zu der Oberseite 4 ausgebildet, so dass sowohl die Unterseite 3 als Oberseite 4 als auch die Oberseite 4 als Unterseite 3 eingesetzt werden kann, wobei die Oberseite 4 der Unterdachbahn 1 stets im verlegten Zustand der Witterungsseite zugewandt ist.

Die Oberseite 4 und die Unterseite 3 können aus dem gleichen Material hergestellt sein, insbesondere nach dem gleichen Herstellungsverfahren.

Es ist vorgesehen, dass die Unterseite 3 zumindest im Wesentlichen das gleiche Flächengewicht wie die Oberseite 4 aufweist, insbesondere wobei sich die Flächengewichte, insbesondere die Vliesgewichte und/oder Materialgewichte, um kleiner als 20 g/m², bevorzugt zwischen 0,0001 bis 20 g/m², weiter bevorzugt kleiner als 10 g/m², weiter bevorzugt weiter kleiner als 5 g/m², voneinander unterscheiden, insbesondere voneinander abweichen.

Es kann vorgesehen sein, dass die Oberseite 4 und die Unterseite 3 eine unterschiedliche Farbgebung, insbesondere verschiedene Farben, aufweisen. Grundsätzlich können die Oberseite 4 und die Unterseite 3 natürlich auch die gleiche Farbe aufweisen. Zudem können verschiedene Bedruckungen auf der Unterseite 3 und der Oberseite 4 vorgesehen sein. Bevorzugt sind die Oberseite 4 und die Unterseite 3 gleich bedruckt.

Fig. 2 zeigt, dass die Unterdachbahn 1 eine die Unterseite 3 aufweisende Unterschicht 5 und eine die Oberseite 4 aufweisende Oberschicht 6 aufweist. Bei der in Fig. 2 dargestellten Ausführungsform ist die Unterschicht 5 symmetrisch zu der Oberschicht 6 bezogen auf die Mittenebene M ausgebildet. Die gesamte Unterdachbahn 1 weist ein symmetrischen Schichtaufbau auf. Es ist vorgesehen, dass die Unterschicht 5 identisch zu der Oberschicht 6 ausgebildet ist.

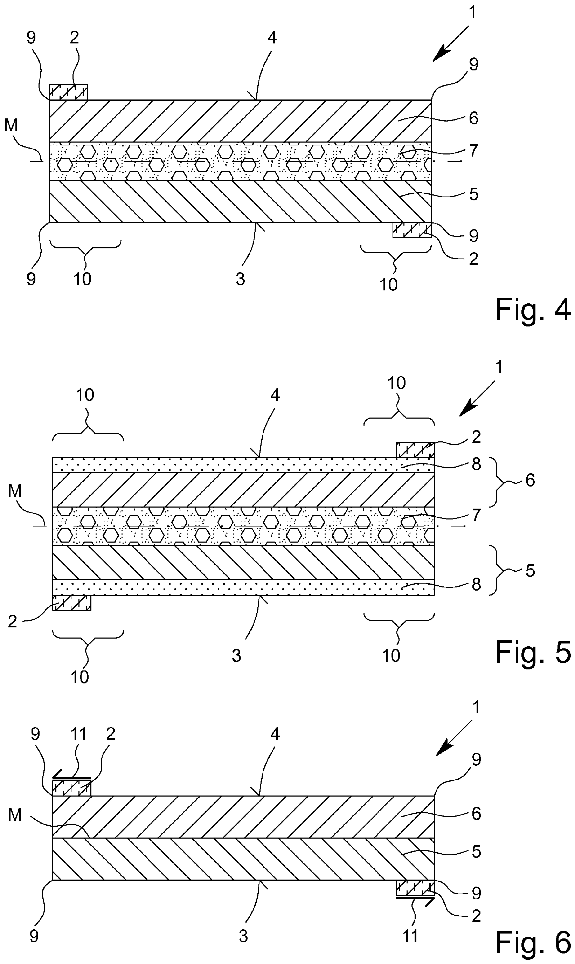

Zwischen der Oberschicht 6 und der Unterschicht 5 kann auch wenigstens eine weitere Schicht eingefasst sein. In Fig.4 ist dargestellt, dass zwischen der Oberschicht 6 und der Unterschicht 5 eine Funktionsschicht 7 angeordnet ist. Die in Fig. 4 dargestellte Funktionsschicht 7, die die mittlere Schicht der Unterdachbahn 1 darstellt und die Mittenebene M beinhaltet, ist wasserdampfdurchlässig und diffusionsoffen. In weiteren Ausführungsformen kann vorgesehen sein, dass die Funktionsschicht 7 wasserdampfdurchlässig ist. Die Mittenebene M verläuft horizontal im Querschnitt gesehen mittig durch die Unterdachbahn 1 und mittig durch die Funktionsschicht 7. Letztlich teilt die Mittenebene M die Unterdachbahn 1 in zwei gleich breite Hälften - im Querschnitt gesehen - auf. Zudem ist bei der in Fig. 4 gezeigten Ausführungsform vorgesehen, dass die gesamte Unterdachbahn 1 wasserdampfdurchlässig und diffusionsoffen ausgebildet ist, wobei gleichzeitig die Unterdachbahn 1 auch wasserdicht und/oder regensicher ist.

Nicht dargestellt ist, dass die Funktionsschicht als mikroporöser Film und/oder als monolithische Membranschicht ausgebildet ist. Weiter ist nicht dargestellt, dass die Funktionsschicht, insbesondere bei Ausbildung als mikroporöser Film, ein polyolefinisches Kunststoffmaterial, insbesondere auf Basis von Polypropylen (PP) und/oder auf Basis von Polyethylen (PE), aufweist und/oder daraus besteht. Die monolithische Membranschicht der Funktionsschicht 7 kann in weiteren Ausführungsformen als Material thermoplastisches Copolyester (TPEE) und/oder thermoplastisches Polyurethan (TPU) aufweisen und/oder daraus bestehen.

Ferner zeigt Fig. 3, dass die Unterschicht 5 und die Oberschicht 6 eine Trägerschicht 8 aufweisen. Weiter ist in Fig. 3 gezeigt, dass die Trägerschichten 8 der Unterschicht 5 und der Oberschicht 6 identisch ausgebildet sind. Als Trägerschicht 8 ist eine Vliesschicht vorgesehen. Die Vliesschicht kann thermoverfestigte bzw. thermisch- oder nadel- oder nassstrahlverfestigt sein. Als Vliesschicht kann ein polyolefinisches Vlies, ein Polyestervlies, ein Naturfaservlies, ein Polypropylen-Spinnvlies, ein Polyamid-Vlies und/oder ein Polylactide-Vlies (PLA-Vlies) vorgesehen sein. Nicht dargestellt ist, dass die als Vliesschicht ausgebildete Trägerschicht 8 als engmaschiges Gewirke hergestellt worden ist.

Nicht dargestellt ist, dass die insbesondere als Spinnvliesschicht ausgebildete Oberschicht 6 und die insbesondere identisch zur Oberschicht 6 ausgebildete Unterschicht 5 als Material einen Kunststoff, insbesondere PP und/oder PE und/oder PET aufweist. Des Weiteren ist nicht dargestellt, dass die Spinnvliesschicht der Oberschicht 6 und/oder Unterschicht 5 wenigstens eine Bikomponentenfaser aufweist.

Die in den dargestellten Ausführungsbeispielen gezeigte Unterdachbahn 1 ist diffusionsoffen, winddicht und wasserdicht und/oder regensicher ausgebildet. Die in Fig. 2 gezeigte Unterdachbahn 1 weist einen S_{d}-Wert von kleiner oder gleich 0,5 m, in dem dargestellten Ausführungsbeispiel von 0,04 m, auf. In weiteren Ausführungsformen kann der S_{d}-Wert zwischen 0,01 bis 0,5 m liegen.

Darüber hinaus ist nicht dargestellt, dass die Funktionsschicht 7 diffusionsoffen, winddicht und wasserdicht ausgebildet ist. Die Funktionsschicht 7 kann dabei einen S_{d}-Wert von kleiner oder gleich 0,5 m, insbesondere von unter 0,1 m, aufweisen.

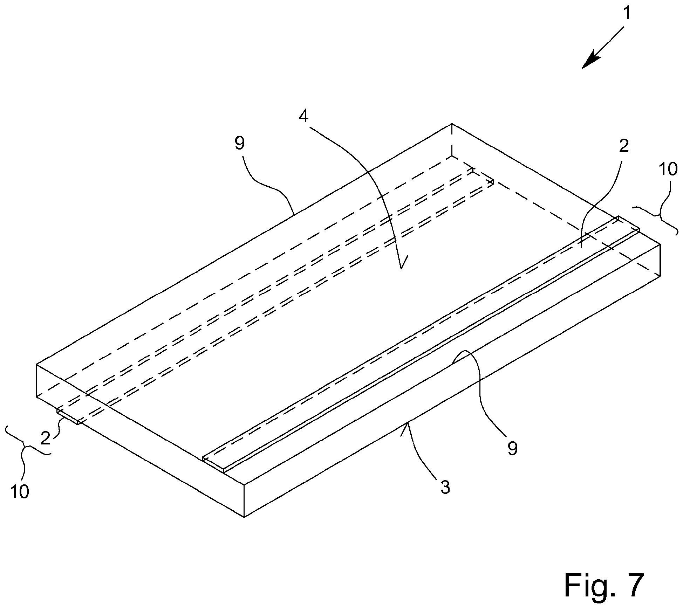

Fig. 7 zeigt, dass die längsrandseitige Klebezone 2 vom äußeren Längsrand 9 der Unterdachbahn 1 beabstandet ist. Die Klebezone 2 ist in dem Längsrandbereich 10 vorgesehen. Der Längsrandbereich 10 erstreckt sich bei dem in Fig. 7 dargestellten Ausführungsbeispiel ausgehend von dem Längsrand 9 der Unterdachbahn 1 über bzw. größer als 1 % der Breite der Unterdachbahn 1, in dem dargestellten Ausführungsbeispiel etwa über 15 % +/- 10 % der Breite der Unterdachbahn 1. Fig. 7 zeigt lediglich schematisch die Anordnung der Klebezonen 2 und dient nicht zum Rückschluss für die Abmessungen der Längen oder Breiten der Klebezone 2.

Nicht dargestellt ist, dass die Klebezone 2 bzw. die Klebezonen 2 streifenförmig, gegebenenfalls als unterbrochene Streifen, ausgebildet ist.

Bei der in Fig. 1 dargestellten Ausführungsform ist vorgesehen, dass die Klebezonen 2 eine Breite zwischen 2 bis 10 cm aufweisen.

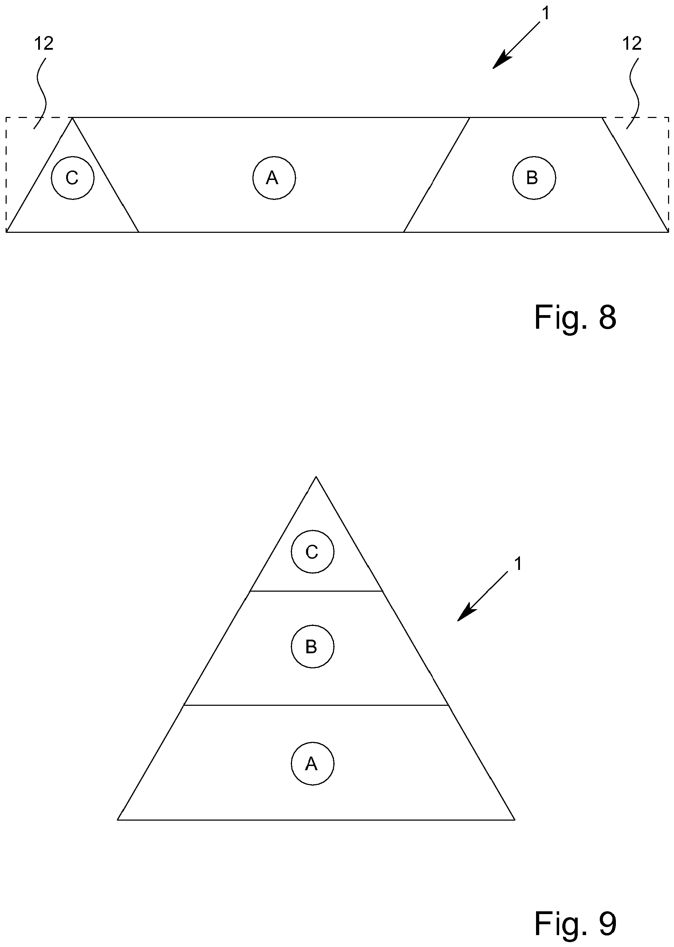

Die in den dargestellten Ausführungsbeispielen gezeigten Klebezonen 2 sind derart ausgebildet, dass bei Verklebung benachbarter Unterdachbahnen 1, wie in Fig. 9 ersichtlich, eine winddichte und/oder luftdichte Verklebung erfolgt.

Die in Fig. 7 gezeigte Versetzung der Ober- und Unterseite 3, 4 in den Längsrandbereichen 10 der Unterdachbahn 1 ist derart gewählt, dass bei Verklebung benachbarter Unterdachbahnen 1 eine Kleber-in-Kleber-Verbindung zwischen den Klebezonen 2 benachbarter Reihen der Unterdachbahnen 1 entsteht. Bei der verlegten Unterdachbahn 1 gemäß dem in Fig. 9 gezeigten Ausführungsbeispiel ist vorgesehen, dass sich die Unterdachbahnen 1 bzw. die einzelnen Reihen der Unterdachbahnen 1 überlappend und die Klebezonen 2 zumindest bereichsweise übereinander angeordnet sind, so dass eine stoffschlüssige Verbindung zwischen den Klebern der Klebezonen 2 hervorgerufen wird. Letztlich kann vorgesehen sein, dass für unterschiedliche Klebezonen 2 unterschiedliche Kleber und/oder Klebereigenschaften, wie Grammatur und/oder Breite des Kleberauftrags, vorgesehen sind, wobei bevorzugt ist, dass die Klebezonen 2 hinsichtlich des verwendeten Klebers und aller Klebereigenschaften identisch sind.

Fig. 6 zeigt, dass die Gegenfläche für die den Kleber aufweisende Klebezone 2 mit einem Liner 11 abgedeckt und/oder oberflächenbehandelt ist. Insbesondere ist die Klebezone 2 durch einen Lack abgedeckt. Der Liner 11 dient zum Schutz der Klebezone 2, insbesondere vor Verunreinigungen und/oder Verschmutzungen.

Zudem zeigt Fig. 5, dass zwischen einer mehrlagigen Oberschicht 6 und einer mehrlagigen Unterschicht 5 eine Funktionsschicht 7 angeordnet sein kann. In diesem Zusammenhang weist die Oberschicht 6 eine als Vliesschicht ausgebildete Trägerschicht 8 und die Unterschicht 5 eine als Vliesschicht ausgebildete Trägerschicht 8, die identisch zu der Trägerschicht 8 der Oberschicht 6 ist, auf. Die Funktionsschicht 7 ist mittig in dem Schichtaufbau vorgesehen. Der in Fig. 5 gezeigte Schichtaufbau ist symmetrisch, und zwar spiegelsymmetrisch zu der Mittenebene M der Unterdachbahn 1, wobei insbesondere die Oberschicht 6 symmetrisch und identisch zu der Unterschicht 5 ist. Es kann auch vorgesehen sein, dass der Schichtaufbau rotationssymmetrisch zu der Mittenebene M der Unterdachbahn 1 ist. Hierdurch kann gewährleistet werden, dass als der Witterung zugewandte Verlegeseite sowohl die Oberseite 4 als auch die Unterseite 3 genutzt werden kann, ohne dass unterschiedliche Eigenschaften der Unterdachbahn 1 vorhanden wären. Darüber hinaus zeigt Fig. 8 den anfallenden Verschnitt 12 bei Verlegung der Unterdachbahn 1 auf einer dreieckförmigen Dachfläche. Durch die identische Ausbildung der Oberseite 4 zu der Unterseite 3 wird der Verschnitt 12 drastisch reduziert, da der Teil B umgedreht - und zwar sowohl um 180° gedreht als auch umgedreht (um sich selbst rotiert) - auf dem Abschnitt A angeordnet werden kann. Den oberseitigen Abschluss bildet der Teil C. Wäre ein Umdrehen des Teils B der Unterdachbahn 1 nicht möglich, so könnte keine Kleber-in-Kleber-Verbindung der aneinander anzuordnenden Unterdachbahnen 1 mit jeweils nur einer Klebezone 2 auf der Oberseite 4 und auf der Unterseite 3 gewährleistet werden.

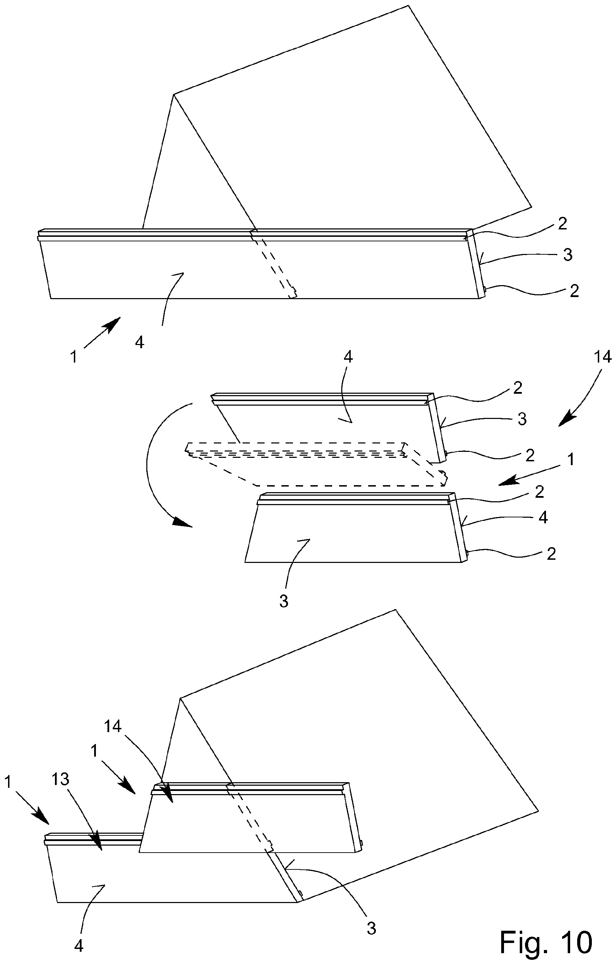

Schließlich zeigt Fig. 10 schematisch das Vorgehen bei der Verlegung. So wird zunächst eine erste Unterdachbahn 1 bzw. eine erste Reihe der Unterdachbahn 1 verlegt und schräg - entsprechend der Geometrie des Steildachs - abgeschnitten. Der abgeschnittene Teil kann zuerst um sich selbst gedreht werden - das heißt die Oberseite 4 der ersten Reihe bildet die Unterseite 3 der zweiten Reihe. Letztlich kann als die der Witterungsseite zugewandte Verlegeseite sowohl die Oberseite 4 als auch die Unterseite 3 verwendet werden. Nach Umklappen der abgeschnittenen Unterdachbahn 1 wird diese auf der ersten Reihe derart angeordnet, dass eine Kleber-in-Kleber-Verbindung zwischen den Reihen der Unterdachbahn 1 erfolgt.

Des Weiteren wird in Fig. 10 das erfindungsgemäße Verfahren zur Verlegung einer Unterdachbahn 1 verdeutlicht. Verfahrensgemäß ist vorgesehen, dass eine erste Bahnreihe 13 der Unterdachbahn 1 an ein Steildach mit angrenzenden Dachflächen angeordnet wird. Die erste Bahnreihe 13 wird an einer angrenzenden Dachfläche schräg abgeschnitten, und zwar an der kurzen Stirnseite der Unterdachbahn 1. Der abgeschnittene Teil der ersten Bahnreihe 13 bildet nun die benachbarte Bahnreihe 14. Die benachbarte Bahnreihe 14 wird umgedreht, so dass die Oberseite 4 der ersten Bahnreihe 13 die Unterseite 3 der benachbarten Bahnreihe 14 bildet. Anschließend wird die benachbarte Bahnreihe 14 oberhalb der ersten Bahnreihe 13 angeordnet und mittelbar und/oder unmittelbar mit der ersten Bahnreihe 13 verbunden, insbesondere so dass die benachbarte Bahnreihe 14 zumindest bereichsweise die erste Bahnreihe 13 überlappt. In diesem Zusammenhang kann vorgesehen sein, dass die Klebezonen 2 der Bahnreihen 13, 14 übereinander bzw. zumindest teilweise übereinander und/oder nebeneinander angeordnet werden. Besonders bevorzugt ist eine Kleber-in-Kleber-Verbindung der Bahnreihen 13, 14.

Die verlegten Reihen der Unterdachbahn 1 können eine Unterbedachung bilden bzw. als Bestandteil einer Unterbedachung ausgebildet sein.

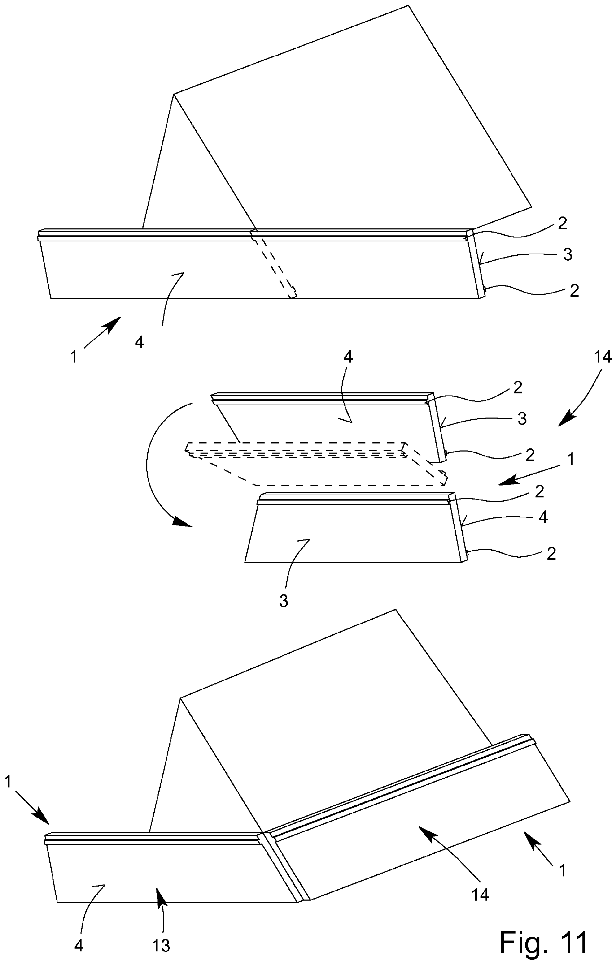

Ferner wird in Fig. 11 eine weitere Verfahrensmöglichkeit zur Verlegung einer Unterdachbahn 1 gezeigt. Verfahrensgemäß ist vorgesehen, dass eine erste Bahnreihe 13 der Unterdachbahn 1 an ein Steildach mit angrenzenden Dachfläche angeordnet wird. Die erste Bahnreihe 13 wird an einer angrenzenden Dachfläche schräg abgeschnitten, und zwar an der kurzen Stirnseite der Unterdachbahn 1. Der abgeschnittene Teil bildet nun die benachbarte Bahnreihe 14 auf der angrenzenden Dachfläche. Die benachbarte Bahnreihe 14 wird umgedreht, so dass die Oberseite 4 der ersten Bahnreihe 13 die Unterseite 3 der benachbarten Bahnreihe 14 auf der angrenzenden Dachfläche bildet. Anschließend wird die benachbarte Bahnreihe 14 neben der ersten Bahnreihe 13 auf der angrenzenden Dachfläche angeordnet.

### Bezugszeichenliste:

- 1: Unterdachbahn
- 2: Klebezonen
- 3: Unterseite
- 4: Oberseite
- 5: Unterschicht
- 6: Oberschicht
- 7: Funktionsschicht
- 8: Trägerschicht
- 9: Längsrand
- 10: Längsrandabschnitt
- 11: Liner
- 12: Verschnitt
- 13: erste Bahnreihe
- 14: benachbarte Bahnreihe

- M: Mittenebene

## Patentansprüche

1. Verfahren zur Verlegung einer Unterdachbahn (1) auf Steildächern mit angrenzenden Dachflächen,
wobei auf der Unterseite (3) und auf der Oberseite (4) der Unterdachbahn (1), wenigstens eine längsrandseitige Klebezone (2) vorgesehen ist, wobei die im verlegten Zustand nach innen zeigende Unterseite (3) und die der Witterungsseite zugewandte Oberseite (4) identisch ausgebildet sind, wobei die Unterdachbahn (1) eine wasserdampfdurchlässige und diffusionsoffene Funktionsschicht (7) aufweist und wobei die Unterdachbahn (1) diffusionsoffen ausgebildet ist, wobei die Unterdachbahn (1) einen S_{d} -Wert von kleiner oder gleich 0,5 m aufweist, wobei die Unterdachbahn (1) eine die Unterseite (3) aufweisende Unterschicht (5) und eine die Oberseite (4) aufweisende Oberschicht (6) aufweist, wobei die Unterschicht (5) symmetrisch zu der Oberschicht (6) ausgebildet ist, wobei die Unterschicht (5) und die Oberschicht (6) eine Trägerschicht (8) aufweisen, nämlich eine identisch ausgebildete Vliesschicht,
wobei die Funktionsschicht (7) als mikroporöser Film und/oder als monolithische Membranschicht ausgebildet ist,
wobei die Unterseite (3) zumindest im Wesentlichen das gleiche Flächengewicht wie die Oberseite (4) aufweist und
wobei das Flächengewicht der als Vliesschicht ausgebildeten Oberschicht (6) und der als identisch zur Oberschicht (6) ausgebildeten Unterschicht (5) zwischen 40 bis 100 g/m² liegt,
wobei eine erste Bahnreihe (13) schräg an einer angrenzenden Dachfläche abgeschnitten wird, wobei der abgeschnittene Teil der ersten Bahnreihe (13) eine benachbarte Bahnreihe (14) bildet, wobei die benachbarte Bahnreihe (14) umgedreht wird, so dass die Oberseite (4) der ersten Bahnreihe (13) die Unterseite (3) der benachbarten Bahnreihe (14) bildet, wobei die benachbarte Bahnreihe (14) mittelbar und/oder unmittelbar mit der ersten Bahnreihe (13) verbunden wird und/oder auf der angrenzenden Dachfläche angeordnet wird.

## Claims

1. Method for laying a sub-roofing sheet (1) on pitched roofs with adjacent roof surfaces,
wherein at least one longitudinal edge-side adhesive zone (2) is provided on the underside (3) and on the upper side (4) of the sub-roofing sheet (1), wherein the underside (3) facing inwards in the laid state and the upper side (4) facing the weather side are of identical construction, wherein the sub-roofing sheet (1) has a watervapor-permeable and diffusion-open functional layer (7) and wherein the sub-roofing sheet (1) is of diffusion-open construction, wherein the sub-roofing membrane (1) has an S_{d} value of less than or equal to 0.5 m, wherein the sub-roofing sheet (1) has an underlayer (5) comprising the underside (3) and an upper layer (6) comprising the upper side (4), wherein the underlayer (5) is formed symmetrically to the upper layer (6), wherein the underlayer (5) and the upper layer (6) have a carrier layer (8), namely an identically formed non-woven layer,
wherein the functional layer (7) is formed as a microporous film and/or as a monolithic membrane layer,
wherein the underside (3) has at least substantially the same weight per unit area as the upper side (4), and
wherein the weight per unit area of the upper layer (6) formed as a non-woven layer and the underlayer (5) formed as identical to the upper layer (6) is between 40 and 100 g/m²,
wherein a first sheet row (13) is cut off obliquely at an adjacent roof surface, the cutoff part of the first sheet row (13) forming an adjacent sheet row (14), the adjacent sheet row (14) being turned over so that the upper side (4) of the first sheet row (13) forms the underside (3) of the adjacent sheet row (14), the adjacent sheet row (14) being connected indirectly and/or directly to the first sheet row (13) and/or being arranged on the adjacent roof surface.

## Revendications

1. Méthode de déplacement d'une membrane de sous-toiture (1) sur des toits en pente avec des surfaces de toitures adjacentes,
dans laquelle il est prévu sur la face inférieure (3) et sur la face supérieure (4) de la membrane de sous-toiture (1) au moins une zone de collage (2) du côté du bord longitudinal, dans laquelle la face inférieure (3) dirigée vers l'intérieur à l'état posé et la face supérieure (4) tournée vers le côté des intempéries sont réalisées de manière identique, dans laquelle la membrane de sous-toiture (1) présentant une couche fonctionnelle (7) perméable à la vapeur d'eau et ouverte à la diffusion et la membrane de sous-toiture (1) est réalisé ouvert à la diffusion, dans laquelle la membrane de sous-toiture (1) présente une valeur S_{d} inférieure ou égale à 0,5 m, dans laquelle le la membrane de sous-toiture (1) présente une couche inférieure (5) présentant la face inférieure (3) et une couche supérieure (6) présentant la face supérieure (4), dans laquelle la couche inférieure (5) est réalisée de manière symétrique par rapport à la couche supérieure (6), dans laquelle la couche inférieure (5) et la couche supérieure (6) présentent une couche de support (8), notamment une couche non tissée réalisée de manière identique,
dans laquelle la couche fonctionnelle (7) est réalisée sous forme de film microporeux et/ou de couche de membrane monolithique,
dans laquelle la face inférieure (3) a au moins sensiblement le même poids par unité de surface que la face supérieure (4), et
dans laquelle le grammage de la couche supérieure (6) réalisée sous forme de couche de non-tissé et de la couche inférieure (5) réalisée sous forme identique à la couche supérieure (6) est compris entre 40 et 100 g/m² ,
dans laquelle une première rangée de membranes (13) est coupée en biais sur une surface de toit adjacente, la partie coupée de la première rangée de membranes (13) formant une rangée de membranes voisine (14), la rangée de membranes voisine (14) étant retournée de sorte que la face supérieure (4) de la première rangée de membranes (13) forme la face inférieure (3) de la rangée de membranes voisine (14), la rangée de membranes voisine (14) étant reliée indirectement et/ou directement à la première rangée de membranes (13) et/ou étant disposée sur la surface de toit adjacente.
